# EUROPÄISCHE PATENTSCHRIFT

(11) **EP 4 089 319 B1**
(45) Veröffentlichungstag und Bekanntmachung des Hinweises auf die Patenterteilung: **21.02.2024**
(21) Anmeldenummer: 21173068.4
(22) Anmeldetag: 10.05.2021
(51) Int. Cl.: F21S 43/20, F21S 43/31, F21S 43/40, F21S 43/14, G02B 3/00, G02B 19/00, F21W 103/55, F21W 103/20

(54) **SIGNALLICHTVORRICHTUNG FÜR EINEN KRAFTFAHRZEUGSCHEINWERFER**
SIGNAL LIGHT DEVICE FOR A MOTOR VEHICLE HEADLIGHT
DISPOSITIF DE SIGNALISATION POUR UN PHARE DE VÉHICULE AUTOMOBILE

(43) Veröffentlichungstag der Anmeldung: 16.11.2022
(73) Patentinhaber: ZKW Group GmbH, 3250 Wieselburg (AT)
(72) Erfinder: Albrecht, Bernhard, 2345 Brunn am Gebirge (AT); Maier, Christian, 3281 Oberndorf an der Melk (AT); Kirbes, Matthias, 3250 Wieselburg (AT); Wieser, Michael, 3354 Wolfsbach (AT); Edletzberger, Thomas, 3382 Loosdorf (AT)
(74) Vertreter: Patentanwaltskanzlei Matschnig & Forsthuber OG

(56) Entgegenhaltungen:
- EP-A1- 2 237 080
- EP-A2- 2 693 105
- CN-A- 110 630 977
- CN-U- 209 977 826
- DE-A1-102017 117 596
- DE-A1-102018 104 124
- DE-A1-102018 201 449
- JP-A- 2015 201 278
- KR-A- 20170 077 407

## Beschreibung

Die Erfindung betrifft eine Signallichtvorrichtung für einen Kraftfahrzeugscheinwerfer, welche Signallichtvorrichtung Folgendes umfasst:
- zumindest ein Lichtmodul, umfassend zumindest eine Lichtquelle zur Emission von Lichtstrahlen und zumindest eine Streueinrichtung, welche eingerichtet ist, die Lichtstrahlen der zumindest einen Lichtquelle im Wesentlichen in Richtung einer Hauptabstrahlrichtung diffus zu streuen,
- zumindest ein transparenter Lichtbrechungskörper, welcher Lichtbrechungskörper einen Lichteintrittsabschnitt zur Einkopplung der von dem Leuchtmodul diffus gestreuten Lichtstrahlen und einen Lichtaustrittsabschnitt zur Auskopplung der in den Lichtbrechungskörper eingekoppelten Lichtstrahlen aufweist, und wobei der Lichtbrechungskörper in Kombination mit dem zumindest einen Lichtmodul zur Erzeugung einer Signallichtverteilung eingerichtet ist.

Die Erfindung betrifft weiters einen Kraftfahrzeugscheinwerfer mit zumindest einer erfindungsgemäßen Signallichtvorrichtung.

Unter Signallicht ist beispielsweise ein Tagfahrlicht und/oder ein Blinklicht zu verstehen.

Bei einem Tagfahrlicht sollen andere Verkehrsteilnehmer, beispielsweise Fußgänger, ein Kraftfahrzeug im Verkehrsraum vorzeitig erkennen, um Unfälle zu vermeiden.

Im Stand der Technik werden hierzu oft Lichtleiter eingesetzt, welche einen entsprechenden Lichtstrom benötigen, um für einen Fußgänger auch aus weiterer Entfernung erkennbar zu sein.

Die JP 2015 201278 A, die KR 2017 0077407 A und die EP 2 237 080 A1 zeigen Signallichtverteilungen aus dem Stand der Technik. EP 2 693 105 A2 offenbart einen Kraftfahrzeugscheinwerfer mit zwei aufeinanderfolgenden Lichtleitlinsen, welche für die Lichtverteilung von Tagfahrlicht sorgen.

Es ist eine Aufgabe der Erfindung eine verbesserte Signallichtvorrichtung bereitzustellen.

Diese Aufgabe wird durch die Merkmale des unabhängigen Anspruchs 1 gelöst. Bei einem Tagfahrlicht sind besondere Leuchteffekte, wie Funkeln, aus optischen und auch sicherheitstechnischen Gründen wünschenswert, sodass beispielsweise ein Tagfahrlicht besser von anderen Verkehrsteilnehmern aus weiter Entfernung erkannt werden kann, ohne einen erheblichen Lichtstrom einer Lichtquelle einzusetzen, da der funkelnde Effekt mit seinen Lichtspitzen deutlich erkennbar ist.

Unter "im Wesentlichen orthogonal" ist zu verstehen, dass der Lichteintrittsabschnitt bzw. die ebene Lichteintrittsfläche auch eine leichte Verkippung aufweisen kann.

Die erfindungsgemäße Signalvorrichtung kann aufgrund ihres Aufbaus auch einen funkelnden Effekt mit vorhandenem Tageslicht bzw. Sonnenlicht und gänzlich ohne einen zusätzlichen Lichtstrom der Lichtquelle erzeugen.

Es kann vorgesehen sein, dass die Signalvorrichtung einen Haltekörper umfasst, an welchem das zumindest eine Lichtmodul und der zumindest eine Lichtbrechungskörper angeordnet sind.

Es kann vorgesehen sein, dass die Signallichtvorrichtung zur Sicherung des Lichtbrechungskörpers an dem Haltekörper eine erste Befestigungseinrichtung umfasst, welche ein zumindest ein erstes Eingriffselement und zumindest ein erstes Gegeneingriffselement umfasst, wobei das erste Eingriffselement an dem Reflexionsabschnitt des Lichtbrechungskörpers angeordnet ist, und wobei das erste Gegeneingriffselement an dem Haltekörper angeordnet ist, und wobei der Lichtbrechungskörper in einen Befestigungszustand bringbar ist, indem der Lichtbrechungskörper an den Haltekörper aufgesetzt wird, sodass das erste Eingriffselement an dem ersten Gegeneingriffselement angreift, um den Lichtbrechungskörper zumindest gegen eine lineare Bewegung entlang einer Achse, welche parallel zur Hauptabstrahlrichtung verläuft, zu sichern.

Es kann vorgesehen sein, dass das erste Eingriffselement als zumindest eine Feder und das erste Gegeneingriffselement als zumindest eine Nut ausgebildet ist oder das erste Gegeneingriffselement als zumindest eine Feder und das erste Eingriffselement als zumindest eine Nut ausgebildet ist.

Es kann vorgesehen sein, dass die Signallichtvorrichtung eine zweite Befestigungseinrichtung zur Sicherung des Lichtbrechungskörpers an dem Haltekörper umfasst, wobei die zweite Befestigungseinrichtung zumindest ein zweites Eingriffselement umfasst, welches als zumindest eine Klebefläche an dem Haltekörper ausgebildet ist, und zumindest ein zweites Gegeneingriffselement umfasst, welches als flächiger Abschnitt des Reflexionsabschnitts des Lichtbrechungskörpers ausgebildet ist, wobei der flächige Abschnitt in dem Befestigungszustand an dem Haltekörper zur Anlage an der zumindest einen Klebefläche gelangt.

Es kann vorgesehen sein, dass die Signallichtvorrichtung eine Abdeckung und eine dritte Befestigungseinrichtung zur Sicherung des Lichtbrechungskörpers an dem Haltekörper umfasst, wobei die dritte Befestigungseinrichtung zumindest ein drittes Eingriffselement und zumindest ein drittes Gegeneingriffselement umfasst, wobei das dritte Eingriffselement an der Abdeckung angeordnet ist, und wobei das dritte Gegeneingriffselement an dem Lichtaustrittsabschnitt des Lichtbrechungskörpers angeordnet ist, und wobei die Abdeckung in einen Fixierungszustand bringbar ist, indem die Abdeckung an den Haltekörper und abschnittsweise an den Lichtbrechungskörper aufgesetzt wird, sodass das dritte Eingriffselement an dem dritten Gegeneingriffselement angreift, um den Lichtbrechungskörper zumindest gegen eine lineare Bewegung entlang einer Achse, welche parallel zur Hauptabstrahlrichtung verläuft, zu sichern.

Es kann vorgesehen sein, dass das Lichtmodul eine Umlenkeinrichtung umfasst, welche eingerichtet ist, die Lichtstrahlen der zumindest einen Lichtquelle in Richtung der Hauptabstrahlrichtung auf die zumindest eine Streueinrichtung zu lenken.

Es ist erfindungsgemäß vorgesehen, dass das Lichtmodul zumindest einen Kollimator aufweist, welcher der zumindest einen Lichtquelle nachgeschalten ist und eingerichtet ist, die Lichtstrahlen der zumindest einen Lichtquelle parallel zueinander auszurichten.

Es kann vorgesehen sein, dass der zumindest eine Kollimator, die Umlenkeinrichtung und die zumindest eine Streueinrichtung als ein einstückiger, aus einem Material hergestellter Optikkörper ist, wobei vorzugsweise der Optikkörper aus einem Kunststoff, vorzugsweise aus Polycarbonat oder Polymethylmethacrylat, hergestellt ist.

Es ist erfindungsgemäß vorgesehen, dass die Streueinrichtung mehrere unterschiedlich orientierte, ebene Austrittsflächen zur Auskopplung der über den zumindest einen Kollimator in den Optikkörper eingekoppelten Lichtstrahlen im Wesentlichen in Richtung der Hauptabstrahlrichtung umfasst.

Es kann vorgesehen sein, dass der Reflexionsabschnitt des Lichtbrechungskörpers zumindest abschnittsweise eine Metallbeschichtung aufweist.

Die Aufgabe wird ebenso gelöst durch einen Kraftfahrzeugscheinwerfer mit zumindest einer erfindungsgemäßen Signallichtvorrichtung.

Nachfolgend wird die Erfindung anhand von beispielhaften Zeichnungen näher erläutert. Hierbei zeigt
Fig. 1 eine Seitenansicht einer beispielhaften Signallichtvorrichtung gemäß der Erfindung, umfassend einem Lichtmodul mit einer Streueinrichtung und einem Lichtbrechungskörper, welcher auf einem Haltekörper angeordnet ist,
Fig. 2 eine Seitenansicht einer weiteren beispielhaften Signallichtvorrichtung, welche nicht Teil der Erfindung ist, wobei die Streueinrichtung als Reflektor ausgebildet ist,
Fig. 3 eine Seitenansicht des Lichtbrechungskörpers und dem Haltekörper, wobei der Lichtbrechungskörper mittels einer ersten Befestigungseinrichtung an dem Haltekörper in einen Befestigungszustand bringbar ist,
Fig. 4 eine Detailansicht eines zweiten Eingriffselements einer zweiten Befestigungseinrichtung der Signallichtvorrichtungen aus Fig. 1 und Fig. 2,
Fig. 5 eine Seitenansicht des Lichtbrechungskörpers im Befestigungszustand auf dem Haltekörper, wobei zusätzlich eine Abdeckung der Signallichtvorrichtungen umfasst ist, welche mittels einem dritten Befestigungsmittel den Lichtbrechungskörper gegen eine Bewegung aus dem Befestigungszustand sichert, und

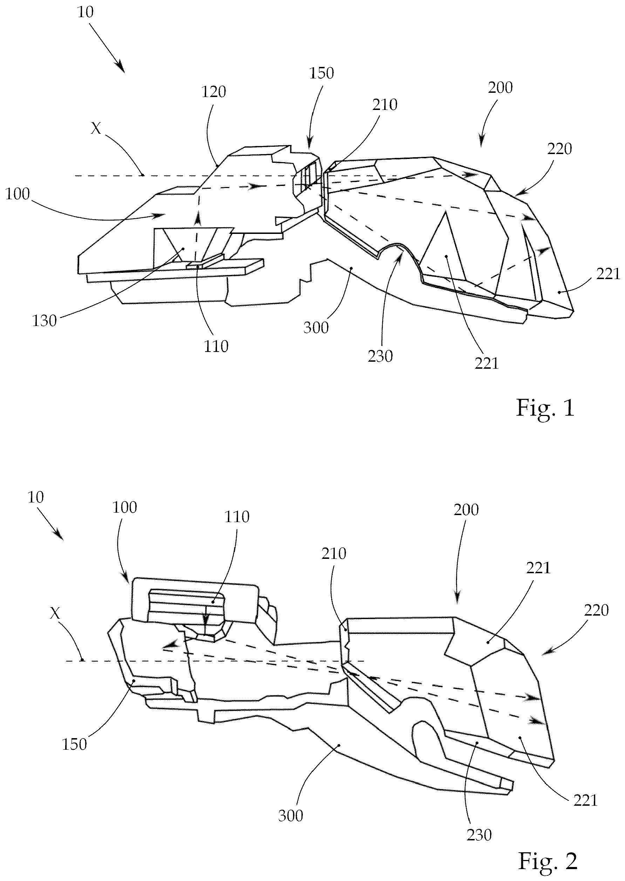

**Fig. 1** zeigt eine beispielhafte Signallichtvorrichtung **10** für einen Kraftfahrzeugscheinwerfer, welche Signallichtvorrichtung **10** ein Lichtmodul **100,** umfassend eine als LED ausgebildete Lichtquelle **110** zur Emission von Lichtstrahlen und eine Streueinrichtung **150,** welche eingerichtet ist, die Lichtstrahlen der Lichtquelle **110** im Wesentlichen in Richtung einer Hauptabstrahlrichtung **X** diffus zu streuen, umfasst.

In dem gezeigten Beispiel in **Fig. 1** umfasst das Lichtmodul **100** ferner eine Umlenkeinrichtung **120,** welche eingerichtet ist, die Lichtstrahlen der Lichtquelle **110** in Richtung der Hauptabstrahlrichtung **X** auf die Streueinrichtung **150** zu lenken. Zusätzlich weist das Lichtmodul **100** einen Kollimator **130** auf, welcher der Lichtquelle **110** in Lichtausbreitungsrichtung nachgeschalten ist und eingerichtet ist, die Lichtstrahlen der Lichtquelle **110** parallel zueinander auszurichten.

In dem Beispiel aus **Fig. 1** ist der Kollimator **130,** die Umlenkeinrichtung **120** und die Streueinrichtung **150** als ein einstückiger, aus einem Material hergestellter Optikkörper, wobei der Optikkörper aus Polycarbonat oder Polymethylmethacrylat hergestellt sein kann. Zur diffusen Lichtstreuung weist die Streueinrichtung **150** mehrere unterschiedlich orientierte, ebene Austrittsflächen zur Auskopplung der über den zumindest einen Kollimator **130** in den Optikkörper eingekoppelten Lichtstrahlen im Wesentlichen in Richtung der Hauptabstrahlrichtung **X** auf.

Ferner umfasst die Signallichtvorrichtung **10** einen transparente Lichtbrechungskörper **200,** welcher aus Quarzglas gebildet ist und welcher einen Lichteintrittsabschnitt **210** zur Einkopplung der von dem Lichtmodul **100** diffus gestreuten Lichtstrahlen und einen Lichtaustrittsabschnitt **220** zur Auskopplung der in den Lichtbrechungskörper **200** eingekoppelten Lichtstrahlen aufweist, und wobei der Lichtbrechungskörper **200** in Kombination mit dem zumindest einen Lichtmodul **100** zur Erzeugung einer Signallichtverteilung, beispielsweise eines Tagfahrlichtes, eingerichtet ist.

Der Lichtbrechungskörper **200** umfasst ferner einen Reflexionsabschnitt **230,** welcher eingerichtet ist, in den Lichtbrechungskörper **200** eingekoppelte Lichtstrahlen total zu reflektieren, wobei der Lichtbrechungskörper **200** durch die Oberflächen des Lichteintrittsabschnittes **210,** des Lichtaustrittsabschnittes **220** und des Reflexionsabschnittes **230** ausgebildete Hülle räumlich begrenzt ist, wobei der Lichteintrittsabschnitt **210** als eine ebene Lichteintrittsfläche ausgebildet ist, welche orthogonal zur Hauptabstrahlrichtung **X** angeordnet ist. Zur Verbesserung der Reflexion der Lichtstrahlen kann der Reflexionsabschnitt **230** des Lichtbrechungskörpers **200** zumindest abschnittsweise eine Metallbeschichtung aufweisen.

Der Lichtsautrittsabschnitt **220** ist aus mehreren unterschiedlich orientierten, ebenen Austrittsflächen **221** gebildet, welche in ihrer Gesamtheit im Wesentlichen einer konvexen Grundform folgen, sodass in den Lichtbrechungskörper **200** diffus eingekoppelte Lichtstrahlen über die mehreren Austrittsflächen **221** als diffuse Signallichtverteilung auskoppeln.

Weiters umfasst die Signalvorrichtung **10** einen Haltekörper **300,** an welchem das Lichtmodul **100** und der eine Lichtbrechungskörper **200** angeordnet und auch befestigt sind, wobei der Lichtbrechungskörper **200** im Wesentlichen mittels dem Reflexionsabschnitt **230** zumindest abschnittweise an dem Haltekörper **300** anliegt bzw. an diesem befestigt ist.

Zur Sicherung des Lichtbrechungskörpers **200** an dem Haltekörper **300** umfasst die Signalvorrichtung **10** eine erste Befestigungseinrichtung **400,** welche ein erstes Eingriffselement **410** und ein erstes Gegeneingriffselement **420** umfasst, wobei das erste Eingriffselement **410** an dem Reflexionsabschnitt **230** des Lichtbrechungskörpers **200** angeordnet und als Nut ausgebildet ist, deren Längserstreckung sich im Wesentlichen orthogonal zur Hauptabstrahlrichtung **X** erstreckt.

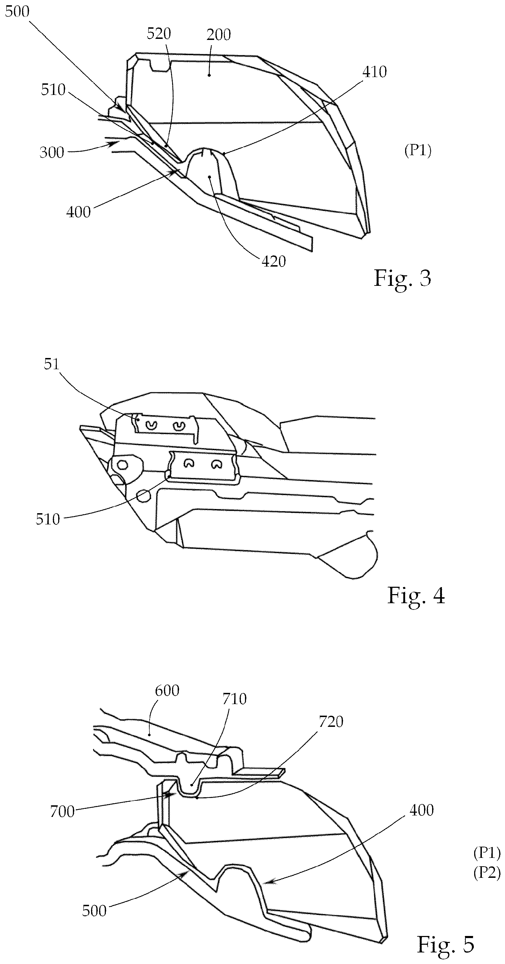

Das erste Gegeneingriffselement **410** ist an dem Haltekörper **300** angeordnet und als Feder ausgebildet, welche mit der Nut des Lichtbrechungskörpers **200** korrespondiert, wobei der Lichtbrechungskörper **200** in einen Befestigungszustand **P1** bringbar ist, indem der Lichtbrechungskörper **200** an den Haltekörper **300** aufgesetzt wird, sodass das erste Eingriffselement **410** an dem ersten Gegeneingriffselement **420** angreift, um den Lichtbrechungskörper **200** im gezeigten Beispiel gegen eine lineare Bewegung entlang einer Achse, welche parallel zur Hauptabstrahlrichtung **X** verläuft, zu sichern. Die Feder greift hierbei formschlüssig an die Nut an, sodass ein Spiel innerhalb dieser Verbindung, welches bei Vibrationen zu geringen Bewegungen führen kann, verhindert wird. Eine detailliertere Darstellung der ersten Befestigungseinrichtung **400** und dem Befestigungszustand **P1** ist beispielsweise in **Fig. 3** bzw. **Fig. 5** besser gezeigt.

Ferner umfasst die Signallichtvorrichtung **10** eine zweite Befestigungseinrichtung **500** zur weiteren Sicherung des Lichtbrechungskörpers **200** an dem Haltekörper **300,** wobei die zweite Befestigungseinrichtung **500** zumindest ein zweites Eingriffselement **510** umfasst, welches als zumindest eine Klebefläche an dem Haltekörper **300** ausgebildet ist, und zumindest ein zweites Gegeneingriffselement **520** umfasst, welches als flächiger Abschnitt des Reflexionsabschnitts **230** des Lichtbrechungskörpers **200** ausgebildet ist, wobei der flächige Abschnitt in dem Befestigungszustand **P1** an dem Haltekörper **300** zur Anlage an der zumindest einen Klebefläche gelangt. Die Klebefläche bzw. die Klebeflächen der zweiten Befestigungsvorrichtung **500** sind in **Fig. 4** deutlicher zu erkennen, wobei die zweite Befestigungseinrichtung **500** den Lichtbrechungskörper **200** zumindest gegen eine lineare Bewegung entlang einer Achse zu sichern, welche orthogonal zur Hauptabstrahlrichtung **X** bzw. dem Verlauf der Längserstreckung der Nut der ersten Befestigungsvorrichtung **400** ist.

Darüber hinaus umfasst die Signallichtvorrichtung **10** eine Abdeckung **600** und eine dritte Befestigungseinrichtung **700** zur weiteren Sicherung des Lichtbrechungskörpers **200** an dem Haltekörper **300,** wobei die dritte Befestigungseinrichtung **700** ein drittes Eingriffselement **710** und ein drittes Gegeneingriffselement **720** umfasst, wobei das dritte Eingriffselement **710** an der Abdeckung **600** angeordnet ist, und wobei das dritte Gegeneingriffselement **720** an dem Lichtaustrittsabschnitt **220** des Lichtbrechungskörpers **200** angeordnet ist.

Die Abdeckung **600** ist in einen Fixierungszustand **P2** bringbar, indem die Abdeckung **600** an den Haltekörper **300** und abschnittsweise an den Lichtbrechungskörper **200** aufgesetzt wird, sodass das dritte Eingriffselement **710** an dem dritten Gegeneingriffselement **720** angreift, um den Lichtbrechungskörper **200** gegen eine lineare Bewegung entlang einer Achse, welche parallel zur Hauptabstrahlrichtung **X** verläuft, zu sichern. In der Fixierungsposition **P2** der Abdeckung ist die Abdeckung **600** ferner mit dem Haltekörper **300** über eine vierte Befestigungseinrichtung fixiert bzw. gegen eine Bewegung gesichert.

Wie beispielsweise in **Fig. 5** ersichtlich ist, sichert die Kombination der ersten, zweiten und dritten Befestigungseinrichtung **400, 500, 700** den Lichtbrechungskörper **200** in seiner Befestigungsposition **P1** gegen jegliche Bewegungsrichtungen.

**Fig. 2** zeigt ein weiteres nicht erfindungsgemäßes Beispiel einer Signallichtvorrichtung **10,** wobei das zuvor Gesagte ebenfalls auf dieses weitere Beispiel zutrifft, wobei lediglich die Streueinrichtung 150 des Lichtmoduls **100** als Reflektor ausgebildet ist, welcher Reflektor mehrere unterschiedlich orientierte Umlenkflächen umfasst, sodass auf den Reflektor einfallende Lichtstrahlen diffus in Richtung der Hauptabstrahlrichtung X umlenkbar sind. Zusätzlich kann eine weitere Streueinrichtung gesehen im Lichtstrahlverlauf zwischen der Lichtquelle **110** und dem Reflektor **150** angeordnet sein.

### LISTE DER BEZUGSZEICHEN

| | |
|---|---|
| Signallichtvorrichtung | 10 |
| Lichtmodul | 100 |
| Lichtquelle | 110 |
| Umlenkeinrichtung | 120 |
| Kollimator | 130 |
| Streueinrichtung | 150 |
| Lichtbrechungskörper | 200 |
| Lichteintrittsabschnitt | 210 |
| Lichtaustrittsabschnitt | 220 |
| Austrittsflächen | 221 |
| Reflexionsabschnitt | 230 |
| Haltekörper | 300 |
| Erste Befestigungseinrichtung | 400 |
| Erstes Eingriffselement | 410 |
| Erstes Gegeneingriffselement | 420 |
| Zweite Befestigungseinrichtung | 500 |
| Zweites Eingriffselement | 510 |
| Zweites Gegeneingriffselement | 520 |
| Abdeckung | 600 |
| Dritte Befestigungseinrichtung | 700 |
| Drittes Eingriffselement | 710 |
| Drittes Gegeneingriffselement | 720 |
| Hauptabstrahlrichtung | X |
| Befestigungszustand | P1 |
| Fixierungszustand | P2 |

## Patentansprüche

1. Signallichtvorrichtung (10) für einen Kraftfahrzeugscheinwerfer, welche Signallichtvorrichtung (10) Folgendes umfasst:
- zumindest ein Lichtmodul (100), umfassend zumindest eine Lichtquelle (110) zur Emission von Lichtstrahlen und zumindest eine Streueinrichtung (150), welche eingerichtet ist, die Lichtstrahlen der zumindest einen Lichtquelle (110) im Wesentlichen in Richtung einer Hauptabstrahlrichtung (X) diffus zu streuen,
- zumindest ein transparenter Lichtbrechungskörper (200), welcher Lichtbrechungskörper (200) einen Lichteintrittsabschnitt (210) zur Einkopplung der von dem Lichtmodul (100) diffus gestreuten Lichtstrahlen und einen Lichtaustrittsabschnitt (220) zur Auskopplung der in den Lichtbrechungskörper (200) eingekoppelten Lichtstrahlen aufweist, und wobei der Lichtbrechungskörper (200) in Kombination mit dem zumindest einen Lichtmodul (100) zur Erzeugung einer Signallichtverteilung eingerichtet ist,
wobei
der zumindest eine Lichtbrechungskörper (200) einen Reflexionsabschnitt (230) umfasst, welcher eingerichtet ist, in den Lichtbrechungskörper (200) eingekoppelte Lichtstrahlen total zu reflektieren, wobei der Lichtbrechungskörper (200) durch die Oberflächen des Lichteintrittsabschnittes (210), des Lichtaustrittsabschnittes (220) und des Reflexionsabschnittes (230) ausgebildete Hülle räumlich begrenzt ist, wobei
der Lichteintrittsabschnitt (210) als eine ebene Lichteintrittsfläche ausgebildet ist, welche im Wesentlichen orthogonal zur Hauptabstrahlrichtung (X) angeordnet ist, wobei der Lichtsautrittsabschnitt (220) aus mehreren unterschiedlich orientierten, ebenen Austrittsflächen (221) gebildet ist, welche in ihrer Gesamtheit im Wesentlichen einer konvexen Grundform folgen, sodass in den Lichtbrechungskörper (200) diffus eingekoppelte Lichtstrahlen über die mehreren Austrittsflächen (221) als diffuse Signallichtverteilung auskoppeln, wobei
das Lichtmodul (100) zumindest einen Kollimator (130) aufweist, welcher der zumindest einen Lichtquelle (110) nachgeschalten ist und eingerichtet ist, die Lichtstrahlen der zumindest einen Lichtquelle (110) parallel zueinander auszurichten, wobei
die Streueinrichtung (150) mehrere unterschiedlich orientierte, ebene Austrittsflächen zur Auskopplung der über den zumindest einen Kollimator (130) in den Optikkörper eingekoppelten Lichtstrahlen im Wesentlichen in Richtung der Hauptabstrahlrichtung (X) umfasst.

2. Signallichtvorrichtung nach Anspruch 1, **dadurch gekennzeichnet, dass** die Signalvorrichtung (10) einen Haltekörper (300) umfasst, an welchem das zumindest eine Lichtmodul (100) und der zumindest eine Lichtbrechungskörper (200) angeordnet sind.

3. Signallichtvorrichtung nach Anspruch 2, **dadurch gekennzeichnet, dass** die Signallichtvorrichtung (10) zur Sicherung des Lichtbrechungskörpers (200) an dem Haltekörper (300) eine erste Befestigungseinrichtung (400) umfasst, welche zumindest ein erstes Eingriffselement (410) und zumindest ein erstes Gegeneingriffselement (420) umfasst, wobei das erste Eingriffselement (410) an dem Reflexionsabschnitt (230) des Lichtbrechungskörpers (200) angeordnet ist, und wobei das erste Gegeneingriffselement (410) an dem Haltekörper (300) angeordnet ist, und wobei der Lichtbrechungskörper (200) in einen Befestigungszustand (P1) bringbar ist, indem der Lichtbrechungskörper (200) an den Haltekörper (300) aufgesetzt wird, sodass das erste Eingriffselement (410) an dem ersten Gegeneingriffselement (420) angreift, um den Lichtbrechungskörper (200) zumindest gegen eine lineare Bewegung entlang einer Achse, welche parallel zur Hauptabstrahlrichtung (X) verläuft, zu sichern.

4. Signallichtvorrichtung nach Anspruch 3, **dadurch gekennzeichnet, dass** das erste Eingriffselement (410) als zumindest eine Feder und das erste Gegeneingriffselement (420) als zumindest eine Nut ausgebildet ist oder das erste Gegeneingriffselement (420) als zumindest eine Feder und das erste Eingriffselement (410) als zumindest eine Nut ausgebildet ist.

5. Signallichtvorrichtung nach Anspruch 3 oder 4, **dadurch gekennzeichnet, dass** die Signallichtvorrichtung (10) eine zweite Befestigungseinrichtung (500) zur Sicherung des Lichtbrechungskörpers (200) an dem Haltekörper (300) umfasst, wobei die zweite Befestigungseinrichtung (500) zumindest ein zweites Eingriffselement (510) umfasst, welches als zumindest eine Klebefläche an dem Haltekörper (300) ausgebildet ist, und zumindest ein zweites Gegeneingriffselement (520) umfasst, welches als flächiger Abschnitt des Reflexionsabschnitts (230) des Lichtbrechungskörpers (200) ausgebildet ist, wobei der flächige Abschnitt in dem Befestigungszustand (P1) an dem Haltekörper (300) zur Anlage an der zumindest einen Klebefläche gelangt.

6. Signallichtvorrichtung nach einem der Ansprüche 2 bis 5, **dadurch gekennzeichnet, dass** die Signallichtvorrichtung (10) eine Abdeckung (600) und eine dritte Befestigungseinrichtung (700) zur Sicherung des Lichtbrechungskörpers (200) an dem Haltekörper (300) umfasst, wobei die dritte Befestigungseinrichtung (700) zumindest ein drittes Eingriffselement (710) und zumindest ein drittes Gegeneingriffselement (720) umfasst, wobei das dritte Eingriffselement (710) an der Abdeckung (600) angeordnet ist, und wobei das dritte Gegeneingriffselement (720) an dem Lichtaustrittsabschnitt (220) des Lichtbrechungskörpers (200) angeordnet ist, und wobei die Abdeckung (600) in einen Fixierungszustand (P2) bringbar ist, indem die Abdeckung (600) an den Haltekörper (300) und abschnittsweise an den Lichtbrechungskörper (200) aufgesetzt wird, sodass das dritte Eingriffselement (710) an dem dritten Gegeneingriffselement (720) angreift, um den Lichtbrechungskörper (200) zumindest gegen eine lineare Bewegung entlang einer Achse, welche parallel zur Hauptabstrahlrichtung (X) verläuft, zu sichern.

7. Signallichtvorrichtung nach einem der Ansprüche 1 bis 6, **dadurch gekennzeichnet, dass** das Lichtmodul (100) eine Umlenkeinrichtung (120) umfasst, welche eingerichtet ist, die Lichtstrahlen der zumindest einen Lichtquelle (110) in Richtung der Hauptabstrahlrichtung (X) auf die zumindest eine Streueinrichtung (150) zu lenken.

8. Signallichtvorrichtung nach einem der Ansprüche 1 bis 7, **dadurch gekennzeichnet, dass** der zumindest eine Kollimator (130), die Umlenkeinrichtung (120) und die zumindest eine Streueinrichtung (150) als ein einstückiger, aus einem Material hergestellter Optikkörper ist, wobei vorzugsweise der Optikkörper aus einem Kunststoff, vorzugsweise aus Polycarbonat oder Polymethylmethacrylat, hergestellt ist.

9. Signallichtvorrichtung nach einem der Ansprüche 1 bis 8, **dadurch gekennzeichnet, dass** der Reflexionsabschnitt (230) des Lichtbrechungskörpers (200) zumindest abschnittsweise eine Metallbeschichtung aufweist.

10. Kraftfahrzeugscheinwerfer mit zumindest einer Signallichtvorrichtung gemäß einem der Ansprüche 1 bis 9.

## Claims

1. Signal light device (10) for a motor vehicle headlamp, which signal light device (10) comprises the following
- at least one light module (100), comprising at least one light source (110) for emitting light beams and at least one scattering device (150), which is set up to diffusely scatter the light beams of the at least one light source (110) essentially in the direction of a main emission direction (X),
- at least one transparent light refraction body (200), which light refraction body (200) has a light inlet section (210) for coupling in the light beams diffusely scattered by the light module (100) and a light outlet section (220) for coupling out the light beams coupled into the light refraction body (200), and wherein the light refraction body (200) in combination with the at least one light module (100) is set up to generate a signal light distribution,
wherein
the at least one light refraction body (200) comprises a reflection section (230) which is set up to totally reflect light beams coupled into the light refraction body (200), wherein the light refraction body (200) is spatially delimited by the envelope formed by the surfaces of the light entry section (210), the light exit section (220) and the reflection section (230), wherein
the light entry section (210) is designed as a planar light entry surface which is arranged essentially orthogonally to the main emission direction (X), the light exit section (220) being formed from a plurality of differently oriented, planar exit surfaces (221) which in their entirety essentially follow a convex basic shape, so that light beams diffusely coupled into the light refraction body (200) couple out via the plurality of exit surfaces (221) as a diffuse signal light distribution, the light module (100) having at least one collimator (130) which is connected downstream of the at least one light source (110) and is set up so that the light beams of the at least one light source (110) are parallel to one another, **characterized in that**
the light module (100) has at least one collimator (130), which is connected downstream of the at least one light source (110) and is set up to align the light beams of the at least one light source (110) parallel to one another, wherein
the scattering device (150) comprises a plurality of differently oriented, planar exit surfaces for coupling out the light beams coupled into the optical body via the at least one collimator (130) essentially in the direction of the main emission direction (X).

2. Signal light device according to claim 1, **characterized in that** the signal device (10) comprises a holding body (300) on which the at least one light module (100) and the at least one light refraction body (200) are arranged.

3. Signal light device according to claim 2, **characterized in that** the signal light device (10) comprises a first fastening device (400) for securing the light refraction body (200) to the holding body (300), which comprises at least one first engagement element (410) and at least one first counter-engagement element (420), the first engagement element (410) being arranged on the reflection section (230) of the light refraction body (200), and wherein the first counter-engaging element (410) is arranged on the holding body (300), and wherein the light refraction body (200) can be brought into a fastening state (P1) by placing the light refraction body (200) on the holding body (300), so that the first engaging element (410) engages with the first counter-engaging element (420) in order to secure the light refraction body (200) at least against linear movement along an axis which runs parallel to the main radiation direction (X).

4. Signal light device according to claim 3, **characterized in that** the first engagement element (410) is designed as at least one spring and the first counter-engagement element (420) is designed as at least one groove, or the first counter-engagement element (420) is designed as at least one spring and the first engagement element (410) is designed as at least one groove.

5. Signal light device according to claim 3 or 4, **characterized in that** the signal light device (10) comprises a second fastening device (500) for securing the light refraction body (200) to the holding body (300), wherein the second fastening device (500) comprises at least one second engagement element (510) which is formed as at least one adhesive surface on the holding body (300) and comprises at least one second counter-engagement element (520) which is formed as a planar portion of the reflection section (230) of the light refraction body (200), which is designed as at least one adhesive surface on the holding body (300), and at least one second counter-engagement element (520) which is designed as a flat section of the reflective section (230) of the refractive body (200), the flat section coming to rest against the at least one adhesive surface in the fastening state (P1) on the holding body (300).

6. Signal light device according to any one of claims 2 to 5, **characterized in that** the signal light device (10) comprises a cover (600) and a third fixing means (700) for securing the light refraction body (200) to the holding body (300), wherein the third fixing means (700) comprises at least a third engaging member (710) and at least a third counter-engaging member (720), wherein the third engaging member (710) is arranged on the cover (600), and wherein the third counter-engaging element (720) is arranged on the light exit portion (220) of the light refraction body (200), and wherein the cover (600) can be brought into a fixing state (P2) by placing the cover (600) on the holding body (300) and in sections on the light refraction body (200), so that the third engagement element (710) engages on the third counter-engagement element (720) in order to secure the light-refracting body (200) at least against linear movement along an axis which runs parallel to the main radiation direction (X).

7. Signal light device according to one of claims 1 to 6, **characterized in that** the light module (100) comprises a deflecting device (120) which is set up to direct the light beams of the at least one light source (110) in the direction of the main emission direction (X) onto the at least one scattering device (150).

8. Signal light device according to one of claims 1 to 7, **characterized in that** the at least one collimator (130), the deflecting device (120) and the at least one scattering device (150) is a one-piece optical body made of one material, preferably the optical body is made of a plastic, preferably of polycarbonate or polymethyl methacrylate.

9. Signal light device according to one of claims 1 to 8, **characterized in that** the reflection section (230) of the light refraction body (200) has a metal coating at least in sections.

10. Motor vehicle headlamp with at least one signal light device according to one of claims 1 to 9.

## Revendications

1. Dispositif lumineux de signalisation (10) pour un phare de véhicule automobile, lequel dispositif lumineux de signalisation (10) comprend ce qui suit :
- au moins un module lumineux (100), comprenant au moins une source lumineuse (110) pour l'émission de rayons lumineux et au moins un dispositif de diffusion (150), qui est conçu pour diffuser les rayons lumineux de la au moins une source lumineuse (110) essentiellement dans la direction d'une direction de rayonnement principale (X),
- au moins un corps réfringent transparent (200), lequel corps réfringent (200) présente une section d'entrée de lumière (210) pour le couplage des rayons lumineux diffusés par le module de lumière (100) et une section de sortie de lumière (220) pour le couplage des rayons lumineux couplés dans le corps réfringent (200), et où le corps réfringent (200) est conçu en combinaison avec le au moins un module de lumière (100) pour générer une distribution de lumière de signal,
dans lequel
le au moins un corps réfracteur de lumière (200) comprend une section de réflexion (230) qui est adaptée pour réfléchir totalement les rayons lumineux couplés dans le corps réfracteur de lumière (200), le corps réfracteur de lumière (200) étant spatialement limité par l'enveloppe formée par les surfaces de la section d'entrée de lumière (210), de la section de sortie de lumière (220) et de la section de réflexion (230), où
la section d'entrée de lumière (210) est réalisée sous la forme d'une surface d'entrée de lumière plane, qui est disposée sensiblement orthogonalement à la direction de rayonnement principale (X), la section de sortie de lumière (220) étant formée de plusieurs surfaces de sortie (221) planes, orientées différemment, qui suivent dans leur ensemble sensiblement une forme de base convexe, de sorte que des rayons lumineux couplés de manière diffuse dans le corps de réfraction de lumière (200) se découplent par l'intermédiaire des plusieurs surfaces de sortie (221) sous la forme d'une répartition de lumière de signal diffuse, dans lequel
le module lumineux (100) présente au moins un collimateur (130) qui est monté en aval de la au moins une source lumineuse (110) et qui est conçu pour orienter les rayons lumineux de la au moins une source lumineuse (110) parallèlement les uns aux autres, où
le dispositif de diffusion (150) comprend plusieurs surfaces de sortie planes orientées différemment pour le découplage des rayons lumineux couplés dans le corps optique via l'au moins un collimateur (130), essentiellement dans la direction de la direction de rayonnement principale (X).

2. Dispositif lumineux de signalisation selon la revendication 1, **caractérisé en ce que** le dispositif de signalisation (10) comprend un corps de maintien (300) sur lequel sont disposés le au moins un module lumineux (100) et le au moins un corps réfringent (200).

3. Dispositif lumineux de signalisation selon la revendication 2, **caractérisé en ce que** le dispositif de signalisation lumineuse (10) comprend, pour fixer le corps réfringent (200) au corps de support (300), un premier dispositif de fixation (400) qui comprend au moins un premier élément d'engagement (410) et au moins un premier élément d'engagement opposé (420), le premier élément d'engagement (410) étant disposé sur la partie réfléchissante (230) du corps réfringent (200), et dans lequel le premier élément de contre-embrayage (410) est disposé sur le corps de support (300), et dans lequel le corps réfringent (200) peut être amené dans un état de fixation (P1) en plaçant le corps réfringent (200) sur le corps de support (300) de sorte que le premier élément de contre-embrayage (410) s'engage avec le premier élément de contre-embrayage (420) pour fixer le corps réfringent (200) au moins contre un mouvement linéaire le long d'un axe qui est parallèle à la direction de rayonnement principale (X).

4. Dispositif lumineux de signalisation selon la revendication 3, **caractérisé en ce que** le premier élément d'engagement (410) est conçu comme au moins un ressort et le premier élément d'engagement opposé (420) est conçu comme au moins une rainure, ou le premier élément d'engagement opposé (420) est conçu comme au moins un ressort et le premier élément d'engagement (410) est conçu comme au moins une rainure.

5. Dispositif lumineux de signalisation selon la revendication 3 ou 4, **caractérisé en ce que** le dispositif lumineux de signalisation (10) comprend un deuxième dispositif de fixation (500) pour fixer le corps réfringent (200) sur le corps de support (300), le deuxième dispositif de fixation (500) comprenant au moins un deuxième élément d'engagement (510), qui est réalisé sous la forme d'au moins une surface de collage sur le corps de support (300), et au moins un deuxième élément d'engagement opposé (520) qui est réalisé sous la forme d'une section plate de la section de réflexion (230) du corps de réfraction de la lumière (200), la section plate venant s'appuyer contre la au moins une surface de collage dans l'état de fixation (P1) sur le corps de support (300).

6. Dispositif lumineux de signalisation selon l'une quelconque des revendications 2 à 5, **caractérisé en ce que** le dispositif lumineux de signalisation (10) comprend un couvercle (600) et un troisième moyen de fixation (700) pour fixer le corps réfringent (200) au corps de support (300), dans lequel le troisième moyen de fixation (700) comprend au moins un troisième élément d'engagement (710) et au moins un troisième élément d'engagement opposé (720), le troisième élément d'engagement (710) étant disposé sur le couvercle (600), et dans lequel le troisième élément de contre-embrayage (720) est disposé sur la section de sortie de lumière (220) du corps de réfraction de lumière (200), et dans lequel le couvercle (600) peut être amené dans un état de fixation (P2) en plaçant le couvercle (600) sur le corps de maintien (300) et par sections sur le corps de réfraction de lumière (200), de sorte que le troisième élément d'engagement (710) s'engage avec le troisième élément d'engagement opposé (720) pour fixer le corps réfringent (200) au moins contre un mouvement linéaire le long d'un axe qui s'étend parallèlement à la direction de rayonnement principale (X).

7. Dispositif lumineux de signalisation selon l'une des revendications 1 à 6, **caractérisé en ce que** le module lumineux (100) comprend un dispositif de déviation (120) agencé pour diriger les rayons lumineux de ladite au moins une source lumineuse (110) dans la direction de la direction principale d'émission (X) vers ledit au moins un dispositif de diffusion (150).

8. Dispositif lumineux de signalisation selon l'une des revendications 1 à 7, **caractérisé en ce que** l'au moins un collimateur (130), le dispositif de déviation (120) et l'au moins un dispositif de diffusion (150) se présentent sous la forme d'un corps optique d'une seule pièce fabriqué dans un matériau, le corps optique étant de préférence fabriqué dans une matière plastique, de préférence en polycarbonate ou en polyméthacrylate de méthyle.

9. Dispositif lumineux de signalisation selon l'une des revendications 1 à 8, **caractérisé en ce que** la partie réfléchissante (230) du corps réfringent (200) présente au moins par endroits un revêtement métallique.

10. Projecteur de véhicule automobile comportant au moins un dispositif lumineux de signalisation selon l'une des revendications 1 à 9.
